# EUROPEAN PATENT APPLICATION

(11) **EP 4 650 336 A1**
(43) Date of publication of application: **19.11.2025**
(21) Application number: 24196293.5
(22) Date of filing: 23.08.2024
(51) Int. Cl.: C05F 3/00

(54) **POULTRY MANURE CONVERSION AGENT MANUFACTURING METHOD AND THE APPLICATION METHOD THEREOF**

(30) Priority: 22.04.2024 TW 113114998
(71) Applicant: Wu, Shih-Chang, 820 Kaohsiung City (TW)
(72) Inventor: Wu, Shih-Chang, 820 Kaohsiung City (TW)
(74) Representative: Loo, Chi Ching

(57) **Abstract**

A method of manufacturing a poultry feces converting agent, which is operated in a poultry feces converting agent equipment. The method includes the following steps: S1 ionized water injection; S2 refined carbon addition and high-pressure oxygen treatment; S3 achievement of stable oxygen state and rotation speed adjustment; S4 Adding enzyme and vinegar solution; S5 fermentation and measurement; S6 light irradiation; S7 adding glycopeptide powder and sugar ester powder and final operation.

## Description

### 1. Field of the Invention

The present invention relates generally to a conversion agent manufacturing method, and more particularly to a poultry manure conversion agent manufacturing method and the application method thereof.

### 2. Description of Related Art

Animal husbandry is an important part of agricultural production. However, in the development of animal husbandry, the treatment of massive amount of manure is a big problem. Generally, manures are used as organic fertilizer.

However, as we know, manures such as chicken manure, pig manure, and cow manure cannot be directly used, because if such unprocessed manures are directly buried into the soil, they will be fermented and produce high temperature to burn the roots of crops. Moreover, microbial activity in the soil will cause oxygen deprivation of the soil, leading to death of the crops. Therefore, at present, the manures are usually fermented in a manure fermenting and processing unit before they are used.

Hence, poultry manure processing has always been an important issue in environment protection and sustainable development of agriculture. The conventional processing method has the problem of resource waste and environmental impact. The present invention provides a highly effective, economic and environment-friendly poultry manure conversion agent and the production method thereof to effectively convert poultry manure into organic fertilizer, while reducing harmful environmental impact.

in view of the fact that the above-mentioned problems cannot be effective avoided or solved, the inventor of the present invention submitted an application for the present invention, in an attempt to solve the above problems.

### SUMMARY OF THE INVENTION

in the whole content of the present invention, the use of quantifiers for components and members such as "a/an" or "one" is for easy expression and general purpose of indicating the scope of the present invention, and shall be construed as one or at least one in the present invention. Unless other meanings are obviously indicated, the singular concepts shall also include pluralities.

The primary object of the present invention is to provide a poultry manure conversion agent manufacturing method, applied in a poultry manure conversion agent unit, mainly comprising: a fermenting and mixing tank; a hyperbaric oxygenation unit, configured in the fermenting and mixing tank; an atomizing and spraying unit, the hyperbaric oxygenation unit being connected to the atomizing and spraying unit and the atomizing and spraying unit configured in the fermenting and mixing tank; an oxygen enriching turntable device, configured in the fermenting and mixing tank, the oxygen enriching turntable device having at least one cross turntable, and the cross turntable having at least one hole; a vortex turntable device, configured in the fermenting and mixing tank; a speed regulating motor, configured above the fermenting and mixing tank; and a light radiating device, configured above the fermenting and mixing tank; the method comprises the following steps from Step S1 to Step S7: S1 - introducing deionized water: introduce deionized water into the fermenting and mixing tank 10 at a speed of 180rpm, making sure the water is distributed evenly; S2 - adding fine carbon powder and hyperbaric oxygen processing: pour fine carbon powder (carbon produced at a high temperature of 1300°C) into the deionized water, making sure they are well mixed, turn on the hyperbaric oxygenation unit, set the pressure at 10kg/cm², set the rotation speed at 180rpm, and maintain the status for three days for breakdown and resynthesis; S3 - accomplishing stable oxygen status and adjusting rotation speed: detect the amount of dissolved oxygen, when it reaches 0.1mg/L, it means the stable oxygen status is accomplished, and then reduce the rotation speed to 65-75rpm, to ensure effective fermentation process; S4 - adding ferment and vinegar solution: on the fourth day, pour in ferment and vinegar solution prepared in advance to promote fermentation reaction; S5 - fermentation and measurement: conduct the fermentation process for four days, and during the process, measure and record parameters such as PH value, dissolved oxygen value, electric conduction value, salinity, and total dissolved solid value; S6 - light radiation using illuminating lamps: during the whole process, use illuminating lamps with wave length of 400-760nm continuously for seven days, to boost the microbial activity; S7 - adding glutathione powder and glycolipid powder and final operation: on the last day, add glutathione powder and glycolipid powder, turn off the illuminating lamps, turn off the hyperbaric oxygenation unit, and reduce the rotation speed to 60rpm to complete the fabrication process; Specifically, the weight proportions between the added fine carbon powder (carbon produced under high temperature of 1300°C), ferment, vinegar solution, glutathione powder, glycolipid powder, and deionized water are: 0.1- 0.3: 15-40: 10-15: 0.1-0.3: 0.1-0.3: 40-55.

The secondary object of the present invention is to provide a method to use a poultry manure conversion agent to convert manure into fertilizer, providing the disclosed poultry manure conversion agent manufacturing method, comprising the following steps from Step S10 to Step S40: S10 - placing the manure on the ground: lay the manure evenly on the ground; S20 - spraying poultry manure conversion agent evenly on the surface of the laid manure: dilute the poultry manure conversion agent at a proportion of 1: 100-200, and evenly spray it on the surface of the manure, then turn the manure and evenly spray the poultry manure conversion agent once again, and then cover the manure with a canvas and leave it; S30 - spraying poultry manure conversion agent on the surface of the manure every other day: on the 1st, 3rd, 5th and 7th day, spray diluted poultry manure conversion agent evenly on the surface of the manure, then turn the manure and spray the conversion agent again; S40 - days of spraying conversion agent on the surface of the manure: the total number operation days is dependent on the weather, if the weather is dry, the manure will be completely converted into organic fertilizer after around 8 days; on the contrary, if the weather is wet, the number of operation days is extended to 10 days.

To be specific, the present invention applies the following technique: providing a poultry manure conversion agent, its ingredients including fine carbon powder (carbon produced at a high temperature of 1300°C), ferment, vinegar solution, glutathione powder, glycolipid powder, and deionized water. The fabrication process includes adding the ingredients at specific proportions into the hyperbaric oxygen fermentation tank in a specific sequence, and conducting fermentation under specific conditions. The fabrication method ensures a highly efficient manure conversion process to produce high-quality organic fertilizer.

in one embodiment of the present invention, the PH value is 3.5-5.5.

in one embodiment of the present invention, the dissolved oxygen value (mg/L) is 1.2-2.

in one embodiment of the present invention, the electric conduction value (us) is 6-10.

in one embodiment of the present invention, the salinity (ppt) is 3-6.

in one embodiment of the present invention, the total dissolved solid value (ppt) is 3-6.

in one embodiment of the present invention, the temperature during the fermentation process is maintained within the range of 35-40 degrees to ensure effective conversion reaction.

in one embodiment of the present invention, the purpose of adding the glutathione powder is to maintain the protein and remove redundant water.

in one embodiment of the present invention, the purpose of adding the glycolipid powder is for oil and water separation in the fermented mixture.

Based on the method described above, the present invention can obtain the following effects:
1. Effective conversion of the poultry manure to reduce adverse environmental impact, providing environmental benefits.
2. Economic and practical formulation ingredients, simple preparation process, providing economic values.
3. Balanced nutrition of the prepared organic fertilizer, good for agricultural application.
4. Based on natural biological processes, the present invention features natural ingredients and the method of breakdown to eliminate smell factors instead of covering the odor. Meanwhile, it can effectively kill and expel larva (maggots) and avoid colony of flies.
5. The use of deionized water can greatly reduce cost. Moreover, the recovery of orange peels for ferment production can also save cost and reduce amount of rubbish production.

### BRIEF DESCRIPTION OF THE DRAWINGS

Fig. 1 is a schematic view of the poultry manure conversion agent unit according to the present invention;
Fig. 2 is a flow chart of the poultry manure conversion agent manufacturing method according to the present invention;
Fig. 3 is a flow chart of the method using the poultry manure conversion agent based on the present invention to convert manure into fertilizer.

### DETAILED DESCRIPTION OF THE INVENTION

The present invention is described in detail below with reference to the accompanying figures based on a preferred embodiment. However, the figured used in the application are for illustration and explanation only, and may not indicate the true proportion and accurate configuration after implementation of the present invention. Therefore, it is to be noted that the scope of the present invention in actual implementation shall not be limited by the proportion and configuration relations presented in the accompanying figures.

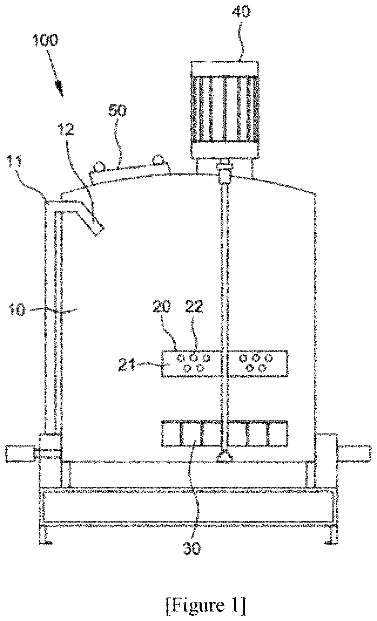

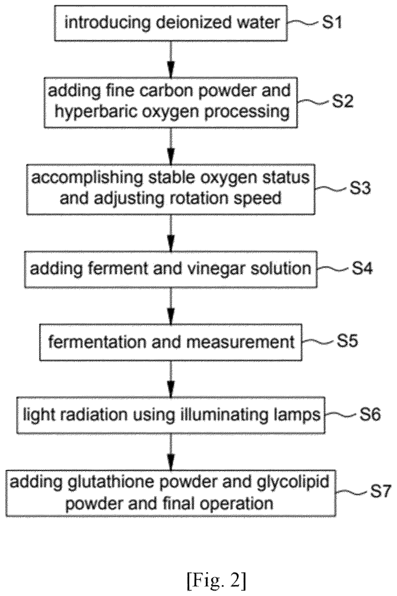

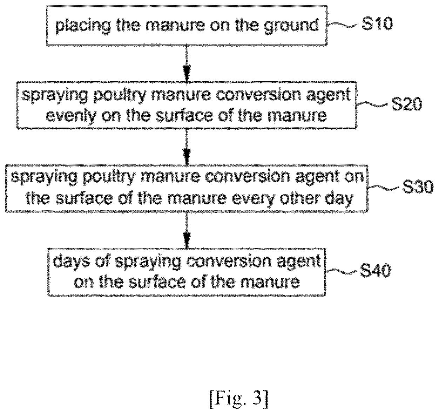

Fig. 1 is a schematic view of the poultry manure conversion agent unit according to the present invention, Fig. 2 is a flow chart of the poultry manure conversion agent manufacturing method according to the present invention, and Fig. 3 is a flow chart of the method using the poultry manure conversion agent based on the present invention to convert manure into fertilizer.

As depicted in Fig. 1 to Fig. 2, the present invention of a poultry manure conversion agent manufacturing method is applied in a poultry manure conversion agent unit 100, mainly comprising: a fermenting and mixing tank 10; a hyperbaric oxygenation unit 11, configured in the fermenting and mixing tank 10; an atomizing and spraying unit 12, the hyperbaric oxygenation unit 11 being connected to the atomizing and spraying unit 12, and the atomizing and spraying unit 12 is configured in the fermenting and mixing tank 10; an oxygen enriching turntable device 20, configured in the fermenting and mixing tank 10, the oxygen enriching turntable device 20 having at least one cross turntable 21, and the cross turntable 21 having at least one hole 22; a vortex turntable device 30, configured in the fermenting and mixing tank 10; a speed regulating motor 40, configured above the fermenting and mixing tank 10; and a light radiating device 50, configured above the fermenting and mixing tank 10; the method comprises the following steps from Step S1 to Step S7: S1 - Introducing deionized water: introduce deionized water into the fermenting and mixing tank 10 at a speed of 180rpm, making sure the water is distributed evenly; S2 - adding fine carbon powder and hyperbaric oxygen processing: pour fine carbon powder (carbon produced at a high temperature of 1300°C) into the deionized water, making sure they are well mixed, turn on the hyperbaric oxygenation unit, set the pressure at 10kg/cm², set the rotation speed at 180 rpm, and maintain the status for three days for breakdown and resynthesis; S3 - accomplishing stable oxygen status and adjusting rotation speed: detect the amount of dissolved oxygen, when it reaches 0.1mg/L, it means the stable oxygen status is accomplished, and then reduce the rotation speed to 65-75 rpm, to ensure effective fermentation process; S4 - adding ferment (orange ferment, which can be made from recovered orange peels) and vinegar solution: on the fourth day, pour in ferment (orange ferment, which can be made from recovered orange peels) and vinegar solution prepared in advance to promote fermentation reaction; S5 - fermentation and measurement: conduct the fermentation process for four days, and during the process, measure and record parameters such as PH value, dissolved oxygen value, electric conduction value, salinity, and total dissolved solid value; S6 - light radiation using illuminating lamps: during the whole process, use illuminating lamps with wave length of 400-760 nm continuously for seven days, to boost the microbial activity; S7 - adding glutathione powder and glycolipid powder and final operation: on the last day, add glutathione powder and glycolipid powder (rhamnolipid), turn off the illuminating lamps, turn off the hyperbaric oxygenation unit, and reduce the rotation speed to 60rpm to complete the fabrication process. Specifically, the weight proportions between the added fine carbon powder (carbon produced under high temperature of 1300°C), ferment, vinegar solution, glutathione powder, glycolipid powder, and deionized water are: 0.1- 0.3: 15-40: 10-15: 0.1-0.3: 0.1-0.3: 40-55.

As shown in Fig. 1 and Fig. 2, in one embodiment of the present invention, the oxygen enriching turntable device 20 is configured in the fermenting and mixing tank 10, the oxygen enriching turntable device 20 has at least one cross turntable 21 (in actual implementation, the device has 4 cross turntables), and the cross turntable 21 has at least one hole 22, wherein, the hole 22 can increase content of oxygen through water flow.

As shown in Fig. 1 and Fig. 2, in one embodiment of the present invention, the vortex turntable device 30 is configured in the fermenting and mixing tank 10, and water is pumped up by a vortex turntable device 30 (in actual implementation, the device has at least 6 vortex turntables), so that a recycling vortex flow status will be generated.

As shown in Fig. 1 to Fig. 3, in one embodiment of the present invention, the method using a poultry manure conversion agent to convert manure into fertilizer discloses a poultry manure conversion agent manufacturing method, which comprises steps from Step S10 to Step S 40: S10 - placing the manure on the ground: lay the manure evenly on the ground; S20 - spraying poultry manure conversion agent evenly on the surface of the laid manure: dilute the poultry manure conversion agent at a proportion of 1: 100-200, and evenly spray it on the surface of the manure, then turn the manure and evenly spray the poultry manure conversion agent once again, and then cover the manure with a canvas and leave it; S30 - spraying poultry manure conversion agent on the surface of the manure every other day: on the 1st, 3rd, 5th and 7th day, spray diluted poultry manure conversion agent evenly on the surface of the manure, then turn the manure and spray the conversion agent again; S40 - days of spraying conversion agent on the surface of the manure: the total number operation days is dependent on the weather, if the weather is dry, the manure will be completely converted into organic fertilizer after around 8 days; on the contrary, if the weather is wet, the number of operation days is extended to 10 days.

Below is a fertilizer specification test report conducted by Soil Survey and Testing Center, College of Agriculture and Natural Resources, National Chung Hsing University, Report Serial Number: 113F0175

### Fertilizer Specification Test Report

| Tested Item | Tested Value | Test Method or Serial Number | Remark |
|---|---|---|---|
| organic substance | 58.1 % | AFS2101-1 | |
| total nitrogen | 2.1 % | AFS2110-1 | |
| Total phosphoric anhydride | 4.4% | AFS2120-1 | LOQ: 0.029 % |
| total potassium oxide | 2.9% | AFS2130-1 | LOQ: 0.020 % |
| arsenic | 0.8 mg/kg | AFS2290-1 | LOQ: 0.625 mg/kg |
| mercury | N.D. | AFS2292-1 | LOQ: 0.0100 mg/kg |
| cadmium | N.D. | AFS2293-1 | LOQ: 0.250 mg/kg |
| chromium | 10 mg/kg | AFS2294-1 | LOQ: 0.500 mg/kg |
| copper | 43 mg/kg | AFS2295-1 | LOQ: 0.625 mg/kg |
| nickel | 5.0 mg/kg | AFS2296-1 | LOQ: 0.625 mg/kg |
| lead | 2 mg/kg | AFS2297-1 | LOQ: 1.88 mg/kg |
| zinc | 475 mg/kg | AFS2298-1 | LOQ: 1.25 mg/kg |
| water | 34.4 % | AFS2901-1 | |
| PH value | 8 | AFS2904-1 | 23.8 °C |
| *carbon-nitrogen ratio | 14 | AFS2906-1 | |

### (Report on fertilizer elements contained in the manure after spraying the poultry manure conversion agent of the present invention)

As shown in Fig. 1 to Fig. 2, in one embodiment of the present invention, the PH value is 3.5-5.5.

As shown in Fig. 1 and Fig. 2, in one embodiment of the present invention, the dissolved oxygen value (mg/L) is 1.2-2.

As shown in Fig. 1 and Fig. 2, in one embodiment of the present invention, the electric conduction value (us) is 6-10.

As shown in Fig. 1 and Fig. 2, in one embodiment of the present invention, the salinity (ppt) is 3-6.

As shown in Fig. 1 and Fig. 2, in one embodiment of the present invention, the total dissolved solid value (ppt) is 3-6.

As shown in Fig. 1 and Fig. 2, in one embodiment of the present invention, the temperature during the fermentation process is maintained within the range of 35-40 degrees to ensure effective conversion reaction.

As shown in Fig. 1 and Fig. 2, in one embodiment of the present invention, the purpose of adding the glutathione powder is to maintain the protein and remove redundant water.

As shown in Fig. 1 and Fig. 2, in one embodiment of the present invention, the purpose of adding glycolipid powder (rhamnolipid) is for oil water separation in the fermented mixture.

The present invention features environmental and economic values: effective conversion of poultry manure can help reduce environmental impacts, the economic and practical formulation ingredients can be prepared conveniently to save cost.

in summary, the manufacturing method of the present invention has never been published or used publicly and the prerequisites for patent application are all met. Therefore, an application for patent is hereby submitted. Your prompt examination and approval will be highly appreciated.

Although the invention has been explained in relation to its preferred embodiment, it is to be understood that many other possible modifications and variations can be made without departing from the spirit and scope of the invention as hereinafter claimed.

### [Notation]

100: poultry manure conversion agent unit
10: fermenting and mixing tank
11: hyperbaric oxygenation unit
12: atomizing and spraying unit
20: oxygen enriching turntable device
21: cross turntable
22: hole
30: vortex turntable device
40: speed regulating motor
50: light radiating device
S1-S7: Step S1 - Step S7
S10-S40: Step S10 - Step S40

## Claims

1. A poultry manure conversion agent manufacturing method, applied in a poultry manure conversion agent unit, mainly comprising:
a fermenting and mixing tank;
a hyperbaric oxygenation unit, configured in the fermenting and mixing tank;
an atomizing and spraying unit, the hyperbaric oxygenation unit being connected to the atomizing and spraying unit, and the atomizing and
spraying unit being configured in the fermenting and mixing tank;
an oxygen enriching turntable device, configured in the fermenting and
mixing tank, the oxygen enriching turntable device having at least one cross turntable, and the cross turntable having at least one hole;
a vortex turntable device, configured in the fermenting and mixing tank;
a speed regulating motor, configured above the fermenting and mixing tank; and
a light radiating device, configured above the fermenting and mixing tank;
the method comprises the following steps: Step S1 to Step S7:
S1 - introducing deionized water: introduce deionized water into the fermenting and mixing tank 10 at a speed of 180rpm, making sure the water is distributed evenly;
S2 - adding fine carbon powder and hyperbaric oxygen processing: pour fine carbon powder into the deionized water, making sure they are well mixed, turn on the hyperbaric oxygenation unit, set the pressure at 10 kg/cm², set the rotation speed at 180rpm, and maintain the status for three days for breakdown and resynthesis;
S3 - accomplishing stable oxygen status and adjusting rotation speed:
detect the amount of dissolved oxygen, when it reaches 0.1mg/L, it means the stable oxygen status is accomplished, and then reduce the rotation speed to 65-75 rpm, to ensure effective fermentation process;
S4 - adding ferment and vinegar solution: on the fourth day, pour in ferment and vinegar solution prepared in advance to promote fermentation reaction;
S5 - fermentation and measurement: conduct the fermentation process for four days, and during the process, measure and record parameters such as PH value, dissolved oxygen value, electric conduction value, salinity, and total dissolved solid value;
S6 - light radiation using illuminating lamps: during the whole process, use illuminating lamps with wave length of 400-760 nm continuously for seven days, to boost the microbial activity;
S7 - adding glutathione powder and glycolipid powder and final operation: on the last day, add glutathione powder and glycolipid powder, turn off the illuminating lamps, turn off the hyperbaric oxygenation unit, and reduce the rotation speed to 60rpm to complete the fabrication process;
specifically, the weight proportions between the added fine carbon powder, ferment, vinegar solution, glutathione powder, glycolipid powder, and deionized water are: 0.1- 0.3: 15-40: 10-15: 0.1-0.3: 0.1-0.3: 40-55.

2. The poultry manure conversion agent manufacturing method defined in Claim 1, wherein the PH value is 3.5-5.5.

3. The poultry manure conversion agent manufacturing method defined in Claim 1, wherein the dissolved oxygen value (mg/L) is 1.2-2.

4. The poultry manure conversion agent manufacturing method defined in Claim 1, wherein the electric conduction value (us) is 6-10.

5. The poultry manure conversion agent manufacturing method defined in Claim 1, wherein the salinity (ppt) is 3-6.

6. The poultry manure conversion agent manufacturing method defined in Claim 1, wherein the total dissolved solid value (ppt) is 3-6.

7. The poultry manure conversion agent manufacturing method defined in Claim 1, wherein, the temperature during the fermentation process is maintained within the range of 35-40 degrees, to ensure effective conversion reaction.

8. The poultry manure conversion agent manufacturing method defined in Claim 1, wherein, the purpose of adding the glutathione powder is to maintain the protein, and remove redundant water.

9. The poultry manure conversion agent manufacturing method defined in Claim 1, wherein, the purpose of adding the glycolipid powder is for oil water separation in the fermented mixture.

10. A method to use a poultry manure conversion agent to convert manure into fertilizer, providing the poultry manure conversion agent manufacturing method defined in Claim 1, comprising the following steps from Step S10 to Step S40:
S10 - placing the manure on the ground: lay the manure evenly on the ground;
S20 - spraying poultry manure conversion agent evenly on the surface of the laid manure: dilute the poultry manure conversion agent at a proportion of 1:100-200, and evenly spray it on the surface of the manure, then turn the manure and evenly spray the poultry manure conversion agent once again, and then cover the manure with a canvas and leave it;
S30 - spraying poultry manure conversion agent on the surface of the manure every other day: on the 1st, 3rd, 5th and 7th day, spray diluted poultry manure conversion agent evenly on the surface of the manure, then turn the manure and spray the conversion agent again;
S40 - days of spraying conversion agent on the surface of the manure: the total number operation days is dependent on the weather, if the weather is dry, the manure will be completely converted into organic fertilizer after around 8 days; on the contrary, if the weather is wet, the number of operation days is extended to 10 days.
